# FASCICULE DE BREVET EUROPEEN

(11) **EP 3 730 258 B1**
(45) Date de publication et mention de la délivrance du brevet: **19.01.2022**
(21) Numéro de dépôt: 20171267.6
(22) Date de dépôt: 24.04.2020
(51) Int. Cl.: B25J 19/00, B25J 21/00, B01L 1/02

(54) **ISOLATEUR JETABLE ET INSTALLATION DE CONDITIONNEMENT DE PRODUITS COMPRENANT UN TEL ISOLATEUR JETABLE**
EINWEG-ISOLATOR UND VERPACKUNGSANLAGE VON PRODUKTEN, DIE EINEN SOLCHEN EINWEG-ISOLATOR UMFASST
DISPOSABLE INSULATOR AND INSTALLATION FOR PACKAGING PRODUCTS INCLUDING SUCH A DISPOSABLE INSULATOR

(30) Priorité: 26.04.2019 FR 1904444
(43) Date de publication de la demande: 28.10.2020
(73) Titulaire: JCE Biotechnology, 03270 Hauterive (FR)
(72) Inventeur: GOHIER, Eric, 03200 VICHY (FR)
(74) Mandataire: Lavoix

(56) Documents cités:
- WO-A1-2010/100234
- WO-A1-2018/030331
- DE-A1-102017 216 366
- FR-A1- 2 861 619

## Description

La présente invention concerne un isolateur jetable et une installation de conditionnement de produits comprenant un tel isolateur jetable.

Dans le domaine des installations de conditionnement de produits pharmaceutiques, l'utilisation d'enceintes de manipulation est courante. Une telle enceinte définit un environnement interne propre et stérile et comprend du matériel ou des équipements placés à l'intérieur de l'enceinte, tout en permettant à un utilisateur d'effectuer une ou plusieurs manipulations depuis l'extérieur, c'est-à-dire sans être en contact direct avec le matériel ou les équipements manipulés. Une telle enceinte permet d'effectuer la ou les manipulations avec les équipements et/ou le matériel isolés de l'environnement extérieur, l'enceinte étant particulièrement adaptée pour manipuler des produits dangereux et/ou toxiques. Les enceintes permettent ainsi à une personne compétente dans l'art de manipuler les équipements et le matériel disposé à l'intérieur des enceintes, notamment sous atmosphère inerte, par exemple pour manipuler les produits devant rester propres et aseptiques tout au long de la production et/ou de la ou les manipulations.

Il est primordial de maintenir l'enceinte, ainsi que les équipements et le matériel se trouvant à l'intérieur de l'enceinte, dans un état propre et stérile. Ceci implique de nettoyer régulièrement, voire de décontaminer l'enceinte et l'ensemble des équipements et du matériel s'y trouvant, et d'empêcher l'intrusion d'éléments indésirables, tant d'un point de vue particulaire que biologique.

Alternativement, un isolateur jetable, comprenant une enceinte utilisable temporairement, permet de changer régulièrement l'intégralité des équipements et du matériel nécessaires pour la ou les manipulations en un minimum de temps. L'isolateur jetable et au moins une partie des équipements et du matériel s'y trouvant, initialement stériles et qualifiés pour effectuer les manipulations nécessitant un milieu décontaminé, sont jetés après usage. Un tel isolateur jetable a l'avantage de ne pas forcement devoir faire l'objet d'une étape de nettoyage et/ou d'étapes de recalibrage et de validation, ces étapes peuvent en effet s'avérer chronophages dans le cas d'un isolateur permanent et ralentir la production. Un tel isolateur jetable est particulièrement adapté pour réaliser des lots spécifiques, par exemple avec un ou plusieurs produits dédiés à une pathologie spécifique afin d'éviter une contamination croisée entre des lots successifs.

WO-2010/100234-A1 décrit un tel isolateur jetable, qui comprend une zone de support et au moins un moyen de remplissage coopérant avec la zone de support pour positionner au moins un récipient sensiblement en face de l'outil de remplissage. La zone de support est intégrée à la paroi de fond de l'isolateur et un outil du moyen de remplissage est intégré à une paroi périphérique souple de l'isolateur, ce qui induit des contraintes de conception de l'isolateur et en augmente le coût puisqu'il est nécessaire d'adapter l'isolateur aux manipulations précises escomptées.

C'est à ces problèmes qu'entend plus particulièrement remédier l'invention, en proposant un nouvel isolateur jetable qui soit plus pratique.

A cet effet, l'invention a pour objet un isolateur jetable, tel que défini à la revendication 1.

Ainsi, l'isolateur jetable forme une enceinte dont le volume interne est propre et stérile, qualifié pour la manipulation de produits toxiques pour l'opérateur et/ou pour l'environnement, soumis notamment à une réglementation et/ou à une approbation par les autorités compétentes, tels que les composés pharmaceutiques, les composés biologiques dangereux, les médicaments anticancéreux ou antiviraux, etc. L'isolateur jetable comprend plusieurs paires de pièces de jonction qui permettent une installation rapide et sécurisée de l'isolateur dans une chaîne de production, de manière à garantir un positionnement précis des équipements et du matériel, notamment d'un ou de plusieurs récipients à remplir et du matériel de remplissage du ou des récipients, pour assurer le bon fonctionnement de la chaîne de production.

Grâce à l'invention, les étapes fastidieuses de nettoyage, de stérilisation, de recalibrage et de validation entre des productions de lots différents prennent moins de temps puisque l'isolateur jetable est déjà propre, qualifié, stérilisé et prêt à l'emploi avant son utilisation, puis l'isolateur jetable est débarrassé et détruit immédiatement après son utilisation. Il y a donc un gain de temps qui impacte positivement la productivité d'une installation de conditionnement de produits équipée d'un tel isolateur jetable.

L'isolateur jetable est utilisable dans une chaîne de production automatisée, impliquant un ou plusieurs robots à l'extérieur de l'isolateur. Ce ou ces robots peuvent par exemple, mais de manière non limitative, être prévus pour des étapes de remplissage et de bouchage de récipients à remplir à l'intérieur de l'enceinte de l'isolateur jetable. L'isolateur peut facilement être lié à son environnement extérieur, notamment aux dispositifs en amont et en aval de l'isolateur et à chaque robot intervenant dans la manipulation des produits et des équipements disposés à l'intérieur de l'enceinte, tout en étant en mesure d'assurer le positionnement précis des récipients à remplir dans l'enceinte par rapport aux robots chargés du remplissage et du bouchage.

La première paire de pièces de jonction permet de positionner précisément le ou les récipients à remplir, tels que des fioles, des seringues ou des flacons, sur une empreinte de positionnement dans une table de support située à l'extérieur de l'isolateur jetable. La table de support est destinée à servir de support à l'isolateur jetable. Un positionnement exact du ou des récipients est tout particulièrement nécessaire dans le cas d'opérations automatisés, assurées tout particulièrement par un ou plusieurs robots. Chaque deuxième paire de pièces de jonction sert d'interface entre un outil de manipulation, situé à l'intérieur de l'enceinte, et le robot, ce robot comprenant éventuellement un bras articulé. Chaque deuxième paire de pièces de jonction est, préférentiellement, rapide à monter lors du montage de l'isolateur au sein de la ligne de production et rapide à démonter au terme de l'utilisation de l'isolateur jetable.

Chaque paire de pièces de jonction permet ainsi de lier un équipement situé à l'intérieur de l'enceinte à la pièce interne de chaque paire et de lier un composant de la ligne de production situé à l'extérieur de l'enceinte à la pièce externe de chaque paire, tout en assurant l'étanchéité au niveau de l'interface de jonction entre la pièce interne et la pièce externe de chaque paire de pièces de jonction. La praticité et la modularité de l'isolateur conforme à l'invention sont ainsi appréciables.

L'isolateur jetable permet ainsi d'effectuer différentes manipulations de préparation et de conditionnement, telles que le remplissage et le bouchage par vissage et/ou sertissage, de manière automatique, avec une précision élevée et une étanchéité fiable, permettant ainsi un haut niveau de sécurité biologique et particulaire des produits vis-à-vis de l'extérieur de l'isolateur jetable.

La ou les parois souples de l'isolateur jetable limitent l'encombrement lors du stockage des isolateurs jetables non utilisés et lors de l'évacuation de l'isolateur jetable après son utilisation.

Des aspects avantageux mais non obligatoires de l'invention sont spécifiés aux revendications 2 à 9.

L'invention a également pour objet une installation de conditionnement de produits, notamment de produits pharmaceutiques, telle que définie à la revendication 10.

Des caractéristiques additionnelles avantageuses de cette installation sont spécifiées aux revendications 11 à 13.

L'invention sera mieux comprise et d'autres avantages de celle-ci apparaîtront plus clairement à la lumière de la description qui va suivre, d'un mode de réalisation de l'invention conforme à son principe, donnée uniquement à titre d'exemple et faite en référence aux dessins dans lesquels :
[Fig 1] la figure 1 est une représentation schématique d'une installation de conditionnement de produits comprenant un isolateur jetable conforme à l'invention ;
[Fig 2] la figure 2 est une représentation schématique de l'isolateur jetable de la figure 1, associé à un robot et à une table de support situés à l'extérieur de l'isolateur jetable ;
[Fig 3] la figure 3 est une vue détaillée de la zone III de la figure 2 ; et
[Fig 4] la figure 4 est une vue détaillée de la zone IV de la figure 2.

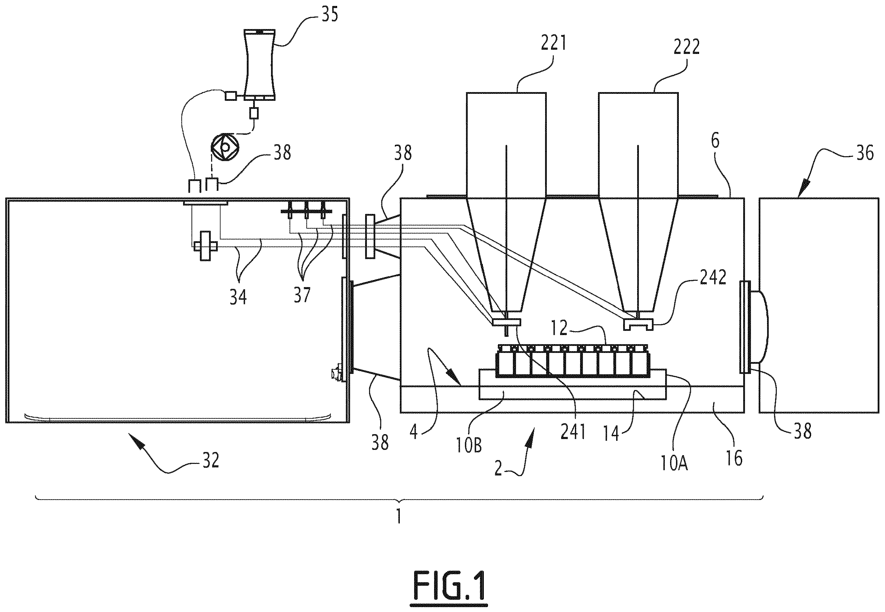

Sur la figure 1 est représentée une installation 1 de conditionnement de produits comprenant un isolateur jetable 2 et une table de support 16 pour cet isolateur, ainsi que des enceintes 32 et 36 disposées respectivement en amont et en aval de l'isolateur 2.

L'enceinte amont 32 et l'enceinte aval 36 sont liées à l'isolateur 2 par l'intermédiaire de ports étanches 38, notamment de type RTP (anagramme de l'expression anglaise « Rapid Transfer Port »), pour le transfert d'équipements ou du matériel de l'enceinte amont 32 vers l'isolateur 2 ou inversement et de l'enceinte aval 36 vers l'isolateur 2 ou inversement. Les ports étanches 38 sont préférentiellement de forme cylindrique et peuvent avoir des diamètres différents. En variante, des moyens d'entrée et de sortie autres que les ports étanches 38 peuvent être envisagés pour introduire ou extraire les équipements et le matériel dans l'isolateur jetable 2 : dans tous les cas, les moyens d'entrée et de sortie ont des dimensions appropriées à cet usage et permettent un transfert sans rupture de confinement et d'asepsie. Avantageusement, ces moyens d'entrée et de sortie, tels que les ports étanches 38, sont sécurisés.

Le ou les produits destinés à être manipulés à l'intérieur de l'isolateur, tels des fluides ou des substances sensiblement liquides, sont stockés dans une ou plusieurs poches 35 de l'installation 1, qui se situent à l'extérieur de l'isolateur 2. L'installation 1 comprend également au moins une tubulure 34 qui s'étend depuis la ou les poches 35 et qui permet d'en transférer le ou les produits jusqu'à l'intérieur de l'isolateur 2, via un ou plusieurs des ports étanches 38. L'installation 1 peut également comprendre au moins une tubulure 37 permettant d'acheminer un fluide de l'extérieur jusqu'à l'intérieur de l'isolateur 2, ce fluide étant destiné à être utilisé dans l'isolateur à des fins diverses. A titre d'exemple, la tubulure 37 permet ainsi d'opérer un tirage au vide, pour des raisons qui apparaîtront plus loin. En variante, cette tubulure peut acheminer de l'air comprimé, de l'azote, etc.

Dans le mode de réalisation visible à la figure 1, l'installation 1 comprend en outre un premier robot 221, chargé d'une première manipulation, et un deuxième robot 222, chargé d'une deuxième manipulation, différente de la première manipulation. Les deux robots 221 et 222 sont liés à l'isolateur 2, tout en étant situés à l'extérieur de l'isolateur 2. Bien entendu, comme on le comprendra par la suite, ni le nombre de robots, ni la nature des manipulations opérées par le ou les robots ne sont limitatifs de l'invention. D'ailleurs, la suite du texte aborde un cas général où aucune distinction n'est faite entre le robot 221 et le robot 222, chaque robot portant alors la même référence 22.

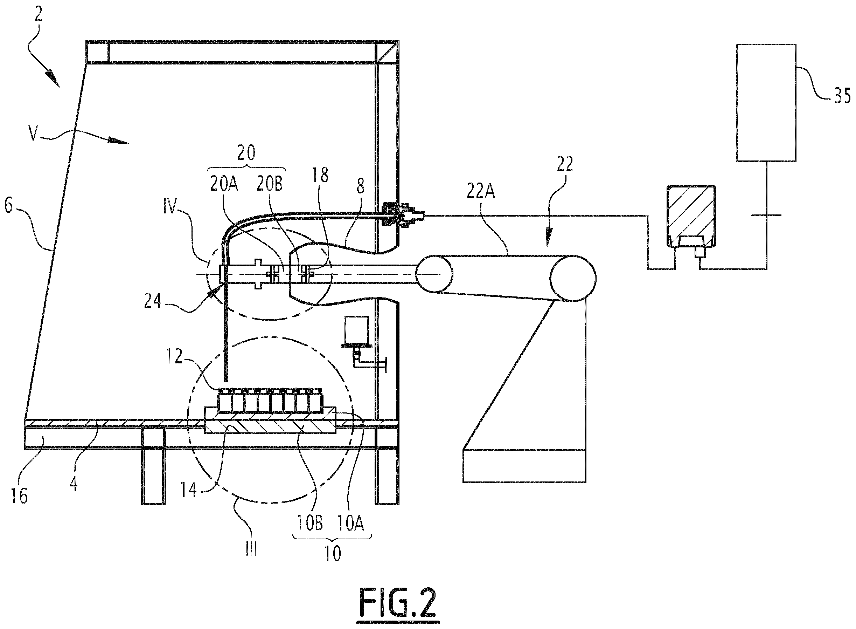

Comme bien visible sur la figure 2, l'isolateur 2 comporte un fond 4 et une paroi périphérique 6 coiffant le fond 4. Le fond 4 et la paroi 6, forment ensemble une enceinte qui délimite un volume interne fermé V de l'isolateur 2. En utilisation, ce volume V est propre et stérile. L'isolateur 2 présente ainsi un environnement intérieur qui est propre d'un point de vue particulaire et qui est stérile d'un point de vue bactériologique. En pratique, la propreté vis-à-vis des particules venant de l'extérieur est typiquement assurée par une filtration et une alimentation en air appropriées, qui relèvent de technologies connues en soi et non détaillées ici davantage. Quant à la stérilité, elle est initialement opérée par un traitement ad hoc de l'isolateur 2, qui est connu en soi et qui consiste par exemple en une irradiation gamma.

L'enceinte de l'isolateur jetable 2 est composé d'un ou de plusieurs matériaux flexibles, de préférence composés d'au moins un matériau plastique, comme par exemple le PE (polyéthylène). En particulier, le fond 4 et la paroi périphérique 6 sont composés d'un ou de plusieurs matériaux, qui peuvent être identiques, la paroi 6 et le fond 4 pouvant alors être réalisés d'une seule pièce, ou bien qui sont différents. Dans tous les cas, le fond 4 et la paroi 6 peuvent être soudés l'un à l'autre.

L'isolateur jetable 2 est « jetable » dans le sens où il est à usage unique, c'est-à-dire qu'il n'est utilisé qu'une seule fois avant d'être détruit, par exemple par incinération. En variante, l'isolateur jetable 2 peut être utilisé un nombre de fois limité, avant d'être retiré et détruit.

La paroi 6 est souple dans le sens où au moins une partie de cette paroi est assez flexible pour pouvoir être pliée par un opérateur sans obliger l'opérateur à fournir un effort excessif pour procéder au pliage de la paroi 6. Le volume interne V délimité par la paroi 6 et le fond 4 peut ainsi être aisément réduit lorsque l'on procède au changement de l'isolateur 2. Une telle souplesse de tout ou partie de la paroi 6 permet avantageusement de réduire l'encombrement de l'isolateur 2 encore inutilisé lorsqu'il est stocké ou bien de limiter l'encombrement de l'isolateur 2 lorsqu'il est dégagé et détruit au terme de son utilisation. Autrement dit, la souplesse de la paroi 6 peut permettre un volume plus compact de l'isolateur 2 avant et après son utilisation.

L'isolateur 2 peut comprendre des pièces rigides qui servent à stabiliser l'enceinte, notamment la paroi 6, lors de l'utilisation de l'isolateur. En variante, l'enceinte de l'isolateur 2 peut être accrochée ou suspendue à un châssis ou une structure rigide.

Le fond 4 est, quant à lui, prévu pour être étalé sur la table de support 16 de l'installation 1. La table de support 16 est à cet effet pourvue d'une empreinte 14 qui est par exemple en creux dans un plan de travail sensiblement horizontal défini par le reste de la table de support 16.

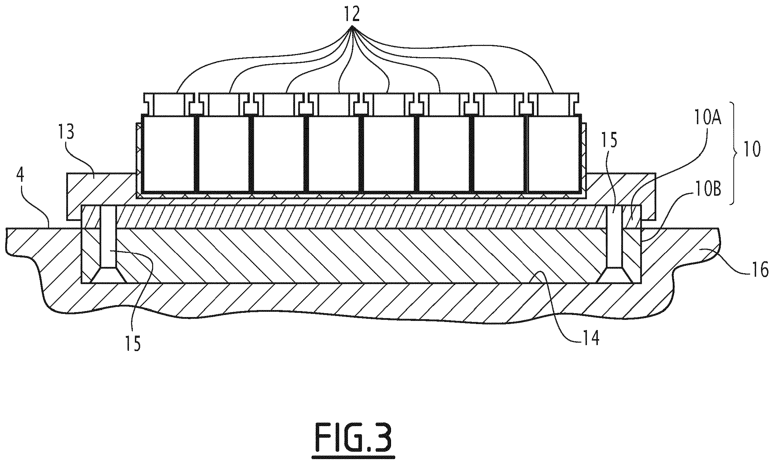

L'isolateur 2 comprend également une première paire 10 de pièces de jonction 10A et 10B. Comme bien visible sur la figure 3, cette paire 10 comprend d'une part une pièce interne 10A, adaptée pour positionner un ou plusieurs récipients 12 à l'intérieur du volume V, et d'autre part une pièce externe 10B, adaptée pour coopérer par complémentarité de formes avec l'empreinte 14.

La pièce interne 10A est placée à l'intérieur du volume V tandis que la pièce externe 10B est placée à l'extérieur du volume V, de manière que la pièce 10A et la pièce 10B se situent de part et d'autre du fond 4. Les pièces 10A et 10B compressent le fond 4 entre elles et forment ainsi une jonction étanche. Autrement dit, la jonction formée par la pièce 10A et la pièce 10B ne laisse passer ni liquide, ni gaz, ni poussière, ni humidité, ni pollution, de quelque nature qu'elle soit. La matière, préférentiellement souple, du fond 4 ainsi compressée fait alors office de joint d'étanchéité. Bien entendu, une garniture d'étanchéité additionnelle peut en option être rapportée entre les pièces 10A et 10B.

La pièce 10A et la pièce 10B sont solidarisées l'une à l'autre à demeure, en particulier à l'aide d'éléments 15 traversant le fond 4. Ces éléments 15 peuvent par exemple être des vis. En plus d'être étanche, la jonction formée par les pièces 10A et 10B est fixe, de manière que, en service, les pièces 10A et 10B ne bougent pas l'une par rapport à l'autre.

En utilisation, l'empreinte 14 coopère par complémentarité de formes avec la pièce 10B de sorte que l'empreinte 14 positionne ainsi la pièce 10B et, par-là, la pièce 10A. Dans le même temps, le ou les récipients 12 sont supportés et ainsi positionnée sur la pièce 10A, et ce soit directement, soit, comme dans l'exemple envisagé sur la figure 3, par l'intermédiaire d'un adaptateur 13 qui forme une interface mécanique entre la pièce 10A et le récipient ou le groupe de récipients 12. Cet adaptateur 13 est positionné et fixé sur la pièce 10A par des éléments de fixation ad hoc, non représentés sur les figures, tels que des vis, des quarts de tour, des plots de centrage, etc. Cet adaptateur 13 permet d'adapter facilement la pièce 10A à la forme du récipient ou du groupe de récipients 12 que la pièce 10A positionne à l'intérieur du volume V. On comprend donc que l'adaptateur est une pièce interchangeable en fonction du format et type du ou des récipients 12.

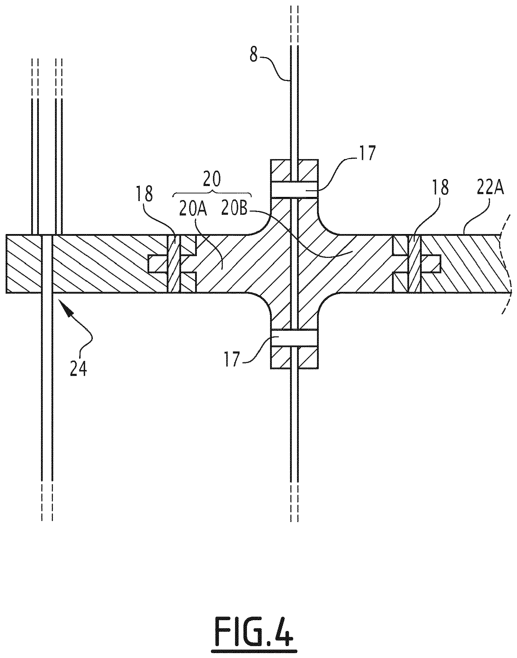

L'isolateur 2 comprend également une deuxième paire 20 de pièces de jonction 20A et 20B. Cette paire 20 est distincte de la paire 10. Comme bien visible sur la figure 4, la deuxième paire 20 comprend d'une part une pièce interne 20A, adaptée pour être liée à un outil de manipulation 24 situé à l'intérieur du volume V, et d'autre part une pièce externe 20B, adaptée pour être liée au robot 22 de l'installation 1.

La pièce 20A est placée à l'intérieur du volume V tandis que la pièce 20B est placée à l'extérieur du volume stérile V, de manière à ce que les pièces 20A et 20B sont placées de part et d'autre de la paroi 6, au niveau d'une partie nécessairement souple de celle-ci. Les pièces de jonction 20A et 20B compressent la paroi 6 entre elles et forment ainsi une jonction étanche. Autrement dit, la jonction formée par la deuxième paire 20 est similaire dans son principe à la jonction formée par les pièces 10A et 10B de la première paire 10. Aucune de ces jonctions ne laisse passer ni liquide, ni gaz, ni poussière, ni humidité, ni pollution, de quelque nature qu'elle soit. La matière souple de la paroi 6 ainsi compressée fait ainsi office de joint d'étanchéité. Bien entendu, une garniture d'étanchéité additionnelle peut en option être rapportée entre les pièces 20A et 20B.

La pièce 20A et la pièce 20B sont solidarisées l'une à l'autre à demeure à l'aide d'éléments 17 traversant la paroi 6. Ces éléments 17 peuvent être par exemple des vis. En plus d'être étanche, la jonction formée par chaque deuxième paire 20 est fixe, si bien que les pièces 20A et 20B ne bougent pas l'une par rapport à l'autre. En pratique, les éléments 17 peuvent avoir une forme différente de celle des éléments 15 solidarisant les pièces de la première paire 10 à travers le fond 4. Cette différence de forme peut par exemple correspondre à une taille différente des éléments 15 et 17.

Dans l'exemple illustré aux figures, la liaison entre la pièce interne 20A et l'outil de manipulation 24 et la liaison entre la pièce externe 20B et le robot 22 se font chacune par l'intermédiaire d'au moins une goupille 18. Ainsi le montage de la pièce interne 20A sur l'outil de manipulation 24 et le montage de la pièce externe 20B sur le robot 22 ne fait pas intervenir d'outil de montage. Le montage est ainsi facilité et rapide à exécuter, étant entendu que, en pratique, de multiples formes de réalisation peuvent être envisagées pour permettre un tel montage facile et rapide. Par ailleurs, en variante non représentée, des organes de fixation nécessitant des outils peuvent aussi être envisagés.

Comme montré sur les figures 2 et 4, le robot 22 peut comporter un bras articulé 22A. Dans ce cas, c'est le bras articulé 22A qui est lié à la pièce externe 20B, notamment par l'intermédiaire de la ou des goupilles 18. De plus, la paroi 6 forme alors avantageusement un manchon 8, qui forme une partie nécessairement souple de la paroi 6 et à l'intérieur duquel le bras articulé 22A est agencé et peut s'y déplacer sans contrainte significative dans ses mouvements. Ce manchon 8 peut aussi bien être prévu d'une seule pièce avec le reste de la paroi 6, qu'être rapporté au reste de la paroi de manière interchangeable.

Le robot 22 est par exemple un robot multiaxes.

La jonction formée par la pièce 20A et la pièce 20B permet au robot 22 d'effectuer depuis l'extérieur de l'enceinte une ou plusieurs manipulations à l'intérieur du volume V par l'intermédiaire de l'outil 24. Autrement dit, le robot 22, notamment son bras articulé 22A, permet de déplacer, par l'intermédiaire de la deuxième paire 20, l'outil 24 par rapport à la table de support 16 pour procéder à la manipulation. On notera que le terme « manipulation » utilisé ici doit s'entendre dans un sens large, en couvrant toute sorte d'opérations opérées par l'outil 24 sur les récipients 12, dont certaines sont détaillées par la suite à titre d'exemples mais qui, plus généralement, sont en lien avec la préparation et le conditionnement des récipients 12 et du produit qu'ils contiennent. Dans tous les cas, comme la ou les opérations de manipulation sont automatisées, l'isolateur 2 doit permettre un positionnement fiable et précis entre chaque récipient 12 et l'outil 24. Ce positionnement est en grande partie assuré par les paires 10 et 20 car le robot 22 applique l'outil 24, lié à ce robot par les pièces de jonction 20A et 20B, sur chacun des récipients 12 qui sont positionnés sur la table de support 16 par les pièces de jonction 10A et 10B et, le cas échéant, l'adaptateur 13.

L'isolateur 2 peut comprendre plusieurs paires 20, la pièce 20A de chaque paire 20 étant alors liée à un outil 24 à l'intérieur du volume V, tandis que la pièce 20B de chaque paire 20 est alors liée à un robot 22 à l'extérieur du volume V, plusieurs outils 24 et plusieurs robots 22 étant alors prévus comme montré à la figure 1. Dans l'exemple de la figure 1, un premier outil de manipulation 24, appelé « outil de remplissage 241 » par la suite, est adapté pour remplir le ou les récipients 12 avec un ou plusieurs produits, en particulier un ou plusieurs produits pharmaceutiques. Ainsi, l'outil de remplissage 241 peut notamment comprendre une aiguille, une seringue, ou tout autre moyen de remplissage adapté pour transférer un produit, circulant dans la ou l'une des tubulures 34, depuis la ou l'une des poches 35, jusqu'à l'intérieur du ou de chaque récipient 12 à l'intérieur du volume V. Au moins une partie de l'outil de remplissage 241 peut être jetée avec l'isolateur 2 lorsque celui-ci est débarrassé en fin d'utilisation. La paire 20 associée à l'outil de remplissage 241 assure le positionnement de cet outil de remplissage 241 vis-à-vis de l'ouverture du ou de chaque récipient 12 pour procéder au remplissage de ce dernier, le premier robot 221 étant lié à cette paire 20. Egalement dans l'exemple de la figure 1, un deuxième outil de manipulation 24, appelé « outil de bouchage 242 » par la suite, est prévu et adapté pour placer et, le cas échéant, visser ou clipser un bouchon sur chaque récipient 12, par exemple en utilisant le vide tiré par la ou l'une des tubulures 37. Les mêmes degrés de liberté, ou des degrés de liberté différents, sont accordés au deuxième robot 222 lié à l'outil de bouchage 242 par l'intermédiaire d'une paire 20 distincte de la paire qui lie l'outil de remplissage 241 au robot 221. Le positionnement de l'outil de bouchage 242 par rapport à chaque récipient 12 suit une logique similaire à celle du positionnement de l'outil de remplissage 241.

Dans tous les cas, une fois que l'enceinte de l'isolateur 2 est assemblée aux pièces 10A et 10B de la première paire 10 et aux pièces 20A et 20B de la ou des deuxièmes paires 20, ainsi que, le cas échéant, aux ports étanches 38, l'intérieur de l'enceinte est stérilisé et maintenu propre comme évoqué plus haut, la stérilisation étant appliquée, le cas échéant, à l'adaptateur 13 et au ou aux outils de manipulation 24. L'isolateur 2 est ensuite associé aux enceintes 32 et 36 au sein de l'installation 1, comme décrit plus haut. On comprend que l'enceinte amont 32 peut être utilisé pour y réaliser des opérations préparatoires aux manipulations opérées dans l'isolateur 2 notamment par le ou les robots 22. L'enceinte aval 36 peut, quant à elle, être utilisée pour y stocker les récipients 12 ayant subi les manipulations opérées dans l'isolateur 2 et/ou être utilisée pour y réaliser des opérations additionnelles subséquentes sur les récipients 12.

En variante, l'isolateur 2 comprend plusieurs premières paires 10 de pièces de jonction 10A et 10B.

En option, l'enceinte de l'isolateur 2 peut être associée des équipements additionnels tels qu'une balance, notamment une balance d'analyse, et/ou un bol vibrant.

Egalement en option, l'enceinte de l'isolateur 2 comprend, sur sa face avant, une paire de gants, intégrés ou interchangeables, pour permettre à un opérateur de manipuler à la main les équipements et le matériel à l'intérieur du volume V. Ces gants peuvent ainsi permettre de mettre en place les différents outils nécessaires à une production spécifique et/ou les accessoires réutilisables, tels que le bol vibrant ou la balance évoqués ci-dessus.

Toute caractéristique de l'un des modes de réalisation ou variante décrite ci-dessus, peut être mise en œuvre dans les autres modes de réalisation et variantes décrits.

## Revendications

1. Isolateur jetable (2), comprenant une enceinte comportant un fond (4) et une paroi périphérique (6) souple, qui définissent entre eux un volume interne (V) propre et stérile, l'isolateur jetable (2) étant **caractérisé en ce qu'**il comprend également :
- une première paire (10) de pièces de jonction (10A, 10B), cette paire comprenant :
- une pièce interne (10A), placée à l'intérieur du volume (V) et adaptée pour positionner un ou plusieurs récipients (12), et
- une pièce externe (10B), placée à l'extérieur du volume (V) et adaptée pour coopérer par complémentarité de formes avec une empreinte de positionnement (14) prévue sur une table de support (16),
la pièce interne (10A) et la pièce externe (10B) de la première paire (10) de pièces de jonction étant placées de part et d'autre du fond (4) et étant solidarisées l'une à l'autre à demeure, de manière à compresser le fond (4) entre elles en formant une jonction étanche, et
- une deuxième paire (20) de pièces de jonction (20A, 20B), distincte de la première paire (10) de pièces de jonction (10A, 10B), cette deuxième paire (20) comprenant :
- une pièce interne (20A), placée à l'intérieur du volume (V) et adaptée pour être liée à un outil de manipulation (24),
- une pièce externe (20B), placée à l'extérieur du volume (V) et adaptée pour être liée à un robot (22),
la pièce interne (20A) et la pièce externe (20B) de la seconde paire (20) de pièces de jonction étant placées de part et d'autre de la paroi périphérique (6) et étant solidarisées l'une à l'autre à demeure, de manière à compresser la paroi périphérique (6) entre elles en formant une jonction étanche,
de manière que le robot applique l'outil de manipulation (24), lié au robot par la deuxième paire de pièces de jonction, sur le ou les récipients (12) positionnés sur la table de support (16) par la première paire (10) de pièces de jonction (10A, 10B).

2. Isolateur jetable selon la revendication 1, **caractérisé en ce qu'**il comprend plusieurs deuxièmes paires (20) de pièces de jonction, les pièces internes (20A) des deuxièmes paires étant respectivement associées à des outils de manipulation propres (241, 242) et les pièces externes (20B) des deuxièmes paires étant respectivement associées à des robots propres (221, 222).

3. Isolateur jetable selon l'une quelconque des revendications 1 ou 2, **caractérisé en ce que** l'outil de manipulation (24) ou au moins l'un des outils de manipulation (241) est adapté pour remplir le ou les récipients (12).

4. Isolateur jetable selon l'une quelconque des revendications précédentes, caractérisé en ce l'outil de manipulation (24) ou au moins l'un des outils de manipulation (242) est adapté pour placer un bouchon sur le ou les récipients (12).

5. Isolateur jetable selon la revendication 4, caractérisé en ce l'outil de manipulation (24) ou au moins l'un des outils de manipulation (242) est également adapté pour visser ou clipser un bouchon sur le ou les récipients (12).

6. Isolateur jetable selon l'une quelconque des revendications précédentes, **caractérisé en ce que** le robot (22) ou au moins l'un des robots (22 ; 221 ; 222) comporte un bras articulé (22A) auquel la pièce externe (20B) de la deuxième paire (20) de pièces de jonction est adaptée pour être liée.

7. Isolateur jetable selon l'une quelconque des revendications précédentes, **caractérisé en ce que** la pièce interne (20A) de la ou de chaque deuxième paire (20) de pièces de jonction et l'outil de manipulation (24 ; 241, 242) correspondant sont liés par une goupille (18), et **en ce que** la pièce externe (20B) de la ou chaque deuxième paire (20) de pièces de jonction et le robot (22 ; 221, 222) correspondant sont liés par une goupille (18).

8. Isolateur jetable selon l'une quelconque des revendications précédentes, **caractérisé en ce que** la pièce interne (10A) et la pièce externe (10B) de la première paire (10) sont solidarisées l'une à l'autre à demeure par des éléments (15) traversant le fond (4), et **en ce que** les pièces (20A, 20B) de chaque deuxième paire (20) sont solidarisées l'une à l'autre à demeure par des éléments (17) traversant la paroi périphérique (6).

9. Isolateur jetable selon l'une quelconque des revendications précédentes, **caractérisé en ce qu'**il comprend également un adaptateur (13), qui est rapporté fixement sur la pièce interne (10A) de la première paire (10) de pièces de jonction, en y positionnant le ou les récipients (12).

10. Installation (1) de conditionnement de produits, notamment de produits pharmaceutiques, comprenant :
- un isolateur jetable (2) conforme à l'une quelconque des revendications 1 à 9,
- une table de support (16) pourvue d'une empreinte de positionnement (14), l'empreinte de positionnement (14) étant adaptée pour coopérer par complémentarité de formes avec la pièce externe (10B) de la première paire (10) de pièces de jonction (10A, 10B), et
- au moins un robot (22), adapté pour être lié avec la pièce externe (20B) de la deuxième paire (20) de pièces de jonction.

11. Installation selon la revendication 10, **caractérisée en ce que** l'installation (30) comporte également au moins une poche de produits (35), qui est située à l'extérieur de l'isolateur jetable (2) et depuis laquelle s'étend au moins une tubulure de transfert de produits (34) qui est liée à l'isolateur jetable via au moins un port étanche (38).

12. Installation selon la revendication 10 ou 11, **caractérisée en ce que** l'installation (30) comporte également une enceinte amont (32), qui est disposée en amont de l'isolateur jetable (2) et qui est liée à l'isolateur jetable via au moins un port étanche (38).

13. Installation selon l'une des revendications 10 à 12, **caractérisée en ce que** l'installation (30) comporte également une enceinte aval (36), qui est disposée en aval de l'isolateur jetable (2) et qui est liée à l'isolateur jetable via au moins un port étanche (38).

## Patentansprüche

1. Einwegisolator (2), umfassend ein Gehäuse, umfassend einen Boden (4) und eine biegsame Umfangswand (6), die untereinander ein sauberes und steriles Innenvolumen (V) definieren, wobei der Einwegisolator (2) **dadurch gekennzeichnet ist, dass** er außerdem Folgendes umfasst:
- ein erstes Paar (10) von Verbindungsstücken (10A, 10B), dieses Paar umfassend:
- ein inneres Teil (10A), das innerhalb des Volumens (V) platziert und angepasst ist, um einen oder mehrere Behälter (12) zu positionieren, und
- ein äußeres Teil (10B), das außerhalb des Volumens (V) platziert ist und angepasst ist, um durch Formschluss mit einer Positionierungsprägung (14) zusammenzuwirken, die auf einem Auflagetisch (16) bereitgestellt ist,
wobei das innere Teil (10A) und das äußere Teil (10B) des ersten Paars (10) von Verbindungsstücken auf beiden Seiten des Bodens (4) platziert und fest miteinander verbunden sind, um den Boden (4) zwischen ihnen zusammenzudrücken und eine dichte Verbindung zu bilden, und
- ein zweites Paar (20) von Verbindungsstücken (20A, 20B), das sich von dem ersten Paar (10) von Verbindungsstücken (10A, 10B) unterscheidet, das zweite Paar (20) umfassend:
- ein Inneres Teil (20A), das innerhalb des Volumens (V) platziert und angepasst ist, um mit einem Handhabungswerkzeug (24) verbunden zu werden,
- ein äußeres Teil (20B), das außerhalb des Volumens (V) platziert und angepasst ist, um mit einem Roboter (22) verbunden zu werden,
wobei das innere Teil (20A) und das äußere Teil (20B) des zweiten Paars (20) von Verbindungsstücken auf beiden Seiten der Umfangswand (6) platziert und fest miteinander verbunden sind, sodass die Umfangswand (6) zwischen ihnen zusammengedrückt wird, wodurch eine dichte Verbindung gebildet wird,
sodass der Roboter das Handhabungswerkzeug (24), das durch das zweite Paar Verbindungsstücke mit dem Roboter verbunden ist, auf den Behälter oder die Behälter (12) anwendet, die durch das erste Paar (10) von Verbindungsstücken (10A, 10B) auf dem Auflagetisch (16) positioniert sind.

2. Einwegisolator nach Anspruch 1, **dadurch gekennzeichnet, dass** er mehrere zweite Paare (20) von Verbindungsstücken umfasst, wobei die inneren Teile (20A) der zweiten Paare jeweils mit eigenen Handhabungswerkzeugen (241, 242) assoziiert sind und die äußeren Teile (20B) der zweiten Paare jeweils mit eigenen Robotern (221, 222) assoziiert sind.

3. Einwegisolator nach einem der Ansprüche 1 oder 2, **dadurch gekennzeichnet, dass** das Handhabungswerkzeug (24) oder mindestens eines der Handhabungswerkzeuge (241) zum Befüllen des oder der Behälter (12) angepasst ist.

4. Einwegisolator nach einem der vorherigen Ansprüche, **dadurch gekennzeichnet, dass** das Handhabungswerkzeug (24) oder mindestens eines der Handhabungswerkzeuge (242) angepasst ist, um einen Verschluss auf den oder die Behälter (12) zu setzen.

5. Einwegisolator nach Anspruch 4, **dadurch gekennzeichnet, dass** das Handhabungswerkzeug (24) oder mindestens eines der Handhabungswerkzeuge (242) auch angepasst ist, um einen Verschluss auf den oder die Behälter (12) zu schrauben oder zu clipsen.

6. Einwegisolator nach einem der vorherigen Ansprüche, **dadurch gekennzeichnet, dass** der Roboter (22) oder mindestens einer der Roboter (22; 221; 222) einen Gelenkarm (22A) umfasst, an dem das äußere Teil (20B) des zweiten Paars (20) von Verbindungsstücken angepasst ist, um verbunden zu werden.

7. Einwegisolator nach einem der vorherigen Ansprüche, **dadurch gekennzeichnet, dass** das Innere Teil (20A) des oder jedes zweiten Paars (20) von Verbindungsstücken und das entsprechende Handhabungswerkzeug (24; 241, 242) durch einen Stift (18) verbunden sind, und dass das Außenteil (20B) des oder jedes zweiten Paars (20) von Verbindungsstücken und der entsprechende Roboter (22; 221, 222) durch einen Stift (18) verbunden sind.

8. Einwegisolator nach einem der vorherigen Ansprüche, **dadurch gekennzeichnet, dass** das innere Teil (10A) und das äußere Teil (10B) des ersten Paars (10) durch Elemente (15), die den Boden (4) durchqueren, fest miteinander verbunden sind, und dass die Teile (20A, 20B) jedes zweiten Paars (20) durch Elemente (17), die die Umfangswand (6) durchqueren, fest miteinander verbunden sind.

9. Einwegisolator nach einem der vorherigen Ansprüche, **dadurch gekennzeichnet, dass** er auch einen Adapter (13) umfasst, der fest an dem Inneren Teil (10A) des ersten Paars (10) von Verbindungsstücken angebracht ist, indem der oder die Behälter (12) darin positioniert werden.

10. Anlage (1) zum Verpacken von Produkten, insbesondere von pharmazeutischen Produkten, umfassend:
- einen Einwegisolator (2) nach einem der Ansprüche 1 bis 9,
- einen Auflagetisch (16), der mit einer Positionierungsprägung (14) versehen ist, wobei die Positionierungsprägung (14) angepasst ist, um durch Formschluss mit dem äußeren Teil (10B) des ersten Paars (10) von Verbindungsstücken (10A, 10B) zusammenzuwirken, und
- mindestens einen Roboter (22), der angepasst ist, um mit dem äußeren Teil (20B) des zweiten Paars (20) von Verbindungsstücken verbunden zu werden.

11. Anlage nach Anspruch 10, **dadurch gekennzeichnet, dass** die Anlage (30) auch mindestens einen Produktbeutel (35) umfasst, der sich außerhalb des Einwegisolators (2) befindet und von dem aus sich mindestens ein Produkttransferschlauch (34) erstreckt, der über mindestens einen wasserdichten Anschluss (38) mit dem Einwegisolator verbunden ist.

12. Anlage nach Anspruch 10 oder 11, **dadurch gekennzeichnet, dass** die Anlage (30) auch eine stromaufwärtige Kammer (32) umfasst, die stromaufwärts von dem Einwegisolator (2) platziert ist und die über mindestens einen wasserdichten Anschluss (38) mit dem Einwegisolator verbunden ist.

13. Anlage nach einem der Ansprüche 10 bis 12, **dadurch gekennzeichnet, dass** die Anlage (30) auch ein stromabwärtiges Gehäuse (36) umfasst, das stromabwärts von dem Einwegisolator (2) platziert ist und die über mindestens einen wasserdichten Anschluss (38) mit dem Einwegisolator verbunden ist.

## Claims

1. A disposable isolator (2), comprising an enclosure including a bottom (4) and a flexible peripheral wall (6), which define a clean and sterile inner volume (V) between them, the disposable isolator (2) being **characterized in that** it also comprises:
- a first pair (10) of joining parts (10A, 10B), this pair comprising:
- an inner part (10A), placed inside the volume (V) and suitable for positioning one or several containers (12), and
- an outer part (10B), placed outside the volume (V) and suitable for cooperating by shape matching with a positioning cavity (14) provided on a support table (16),
the inner part (10A) and the outer part (10B) of the first pair (10) of joining parts being placed on either side of the bottom (4) and being secured to one another permanently, so as to compress the bottom (4) between them while forming a tight junction, and
- a second pair (20) of joining parts (20A, 20B), separate from the first pair (10) of joining parts (10A, 10B), this second pair (20) comprising:
- an inner part (20A), placed inside the volume (V) and suitable for being connected to a manipulating tool (24),
- an outer part (20B), placed outside the volume (V) and suitable for being connected to a robot (22),
the inner part (20A) and the outer part (20B) of the second pair (20) of joining parts being placed on either side of the peripheral wall (6) and being secured to one another permanently, so as to compress the peripheral wall (6) between them while forming a tight junction,
such that the robot applies the manipulating tool (24), connected to the robot by the second pair of joining parts, on the container(s) (12) positioned on the support table (16) by the first pair (10) of joining parts (10A, 10B).

2. The disposable isolator according to claim 1, **characterized in that** it comprises several second pairs (20) of joining parts, the inner parts (20A) of the second pairs being associated with respective manipulating tools (241, 242) and the outer parts (20B) of the second pairs being associated with respective robots (221, 222).

3. The disposable isolator according to any one of claims 1 or 2, **characterized in that** the manipulating tool (24) or at least one of the manipulating tools (241) is suitable for filling the container(s) (12).

4. The disposable isolator according to any one of the preceding claims, **characterized in that** the manipulating tool (24) or at least one of the manipulating tools (242) is suitable for placing, and if applicable, screwing or clipping a stopper on the container(s) (12).

5. The disposable isolator according to claim 4, **characterized in that** the manipulating tool (24) or at least one of the manipulating tools (242) is also suitable for screwing or clipping a stopper on the container(s) (12).

6. The disposable isolator according to any one of the preceding claims, **characterized in that** the robot (22) or at least one of the robots (22; 221; 222) includes an articulated arm (22A) to which the outer part (20B) of the second pair (20) of joining parts is suitable for being connected.

7. The disposable isolator according to any one of the preceding claims, **characterized in that** the inner part (20A) of the or each second pair (20) of joining parts and the corresponding manipulating tool (24; 241, 242) are connected by a pin (18), and **in that** the outer part (20B) of the or each second pair (20) of joining parts and the corresponding robot (22; 221, 222) are connected by a pin (18).

8. The disposable isolator according to any one of the preceding claims, **characterized in that** the inner part (10A) and the outer part (10B) of the first pair (10) are secured to one another permanently by elements (15) passing through the bottom (4), and **in that** the parts (20A, 20B) of each second pair (20) are secured to one another permanently by elements (17) passing through the peripheral wall (6).

9. The disposable isolator according to any one of the preceding claims, **characterized in that** it also comprises an adapter (13), which is securely attached on the inner part (10A) of the first pair (10) of joining parts, while positioning the container(s) (12) there.

10. An installation (1) for conditioning products, in particular pharmaceutical products, comprising:
- a disposable isolator (2) according to any one of claims 1 to 9,
- a support table (16) provided with a positioning cavity (14), the positioning cavity (14) being suitable for cooperating by shape matching with the outer part (10B) of the first pair (10) of joining parts (10A, 10B), and
- at least one robot (22), suitable for being connected with the outer part (20B) of the second pair (20) of joining parts.

11. The installation according to claim 10, **characterized in that** the installation (30) also includes at least one pouch of products (35), which is located outside the disposable isolator (2) and from which at least one product transfer tubing (34) extends that is connected to the disposable isolator via at least one tight port (38).

12. The installation according to claim 10 or 11, **characterized in that** the installation (30) also includes an upstream enclosure (32), which is positioned upstream from the disposable isolator (2) and which is connected to the disposable isolator via at least one tight port (38).

13. The installation according to any one of the claims 10 to 12, **characterized in that** the installation (30) also includes a downstream enclosure (36), which is positioned downstream from the disposable isolator (2) and which is connected to the disposable isolator via at least one tight port (38).
